# EUROPÄISCHE PATENTSCHRIFT

(11) **EP 4 118 944 B1**
(45) Veröffentlichungstag und Bekanntmachung des Hinweises auf die Patenterteilung: **23.10.2024**
(21) Anmeldenummer: 22184148.9
(22) Anmeldetag: 11.07.2022
(51) Int. Cl.: A01B 73/00, A01B 51/04, A01B 59/043, A01B 59/06

(54) **DREIPUNKTGETRAGENES, LANDWIRTSCHAFTLICHES ANBAUGERÄT**
AGRICULTURAL IMPLEMENT WITH THREE-POINT ATTACHMENT
ÉLÉMENT RAPPORTÉ AGRICOLE À TROIS POINTS DE SUPPORT

(30) Priorität: 16.07.2021 DE 202021103830 U
(43) Veröffentlichungstag der Anmeldung: 18.01.2023
(73) Patentinhaber: Grimme Landmaschinenfabrik GmbH & Co. KG, 49401 Damme (DE)
(72) Erfinder: Wischmeyer, Michael, 49179 Venne (DE); Abrams, Jurij, 49401 Damme (DE)
(74) Vertreter: Wischmeyer, André

(56) Entgegenhaltungen:
- EP-A1- 0 108 727
- EP-B1- 2 708 102
- DE-A1- 2 638 417
- DE-A1- 2 641 013
- DE-B- 1 281 732
- FR-A1- 2 262 903
- US-B1- 6 238 170
- STEENO VICHTE: "prijslijst 6/2008 met prijsverhoging 1 juni 2008", STEENO.BE, 27 September 2008 (2008-09-27), pages 1 - 25, XP093127987, Retrieved from the Internet <URL:www.steeno.be> [retrieved on 20240206]

## Beschreibung

Die vorliegende Erfindung betrifft ein dreipunktgetragenes, landwirtschaftliches Anbaugerät, welches insbesondere zur Bodenbearbeitung und/oder Erntevorbereitung ausgebildet ist.

Ein solches, beispielsweise als Krautschläger oder Bodenfräse ausgebildetes Anbaugerät weist eine vordere Längsseite, eine hintere Längsseite und zwei im Vergleich zu den Längsseiten kürzere Stirnseiten auf und ist mit einer Transportvorrichtung für einen Transportbetrieb versehen. Typischerweise umfasst die Transportvorrichtung von auf dem Markt bekannten Geräten eine Deichsel und Stützräder. Diese Stützräder werden während des Feldbetriebs zur Abstützung des Gerätes auf dem Boden verwendet und müssen für den Transportbetrieb des Anbaugeräts auf einer öffentlichen Straße umgesteckt werden, da das Anbaugerät im Feldbetrieb mehr als 3 m Breite, betrachtet in Fahrtrichtung des Schleppers, aufweist, weswegen eine Straßenfahrt mit dem für den Feldbetrieb positionierten Anbaugerät nicht zulässig ist. Das aus dem Stand der Technik bekannte Anbaugerät wird für die Straßenfahrt daher gedreht, so dass seine Längsseiten parallel zur Fahrtrichtung im Transportbetrieb ausgerichtet sind, die Stirnseiten quer zur Fahrtrichtung verlaufen und die Stützräder an der vom Schlepper abgewandten rückwärtigen Stirnseite angeordnet sind. Dann wird das Anbaugerät über eine Deichsel vom Schlepper gezogen.

Die DE 26 41 013 A1 betrifft ein Fahrgestell für landwirtschaftliche Arbeitsgeräte, das ein über drei Abstützstellen von Laufrädern getragenen Rahmen aufweist. Am Rahmen sind mehrere Kraftheber vorgesehen, deren Abstand zueinander quer zur Arbeitsrichtung der Arbeitsbreite der an sie anzubauenden landwirtschaftlichen Arbeitsgeräte entspricht. Weitere bekannte Anbaugeräte sind in den Dokumenten DE 12 81 732 B, US 6 238 170 B1, EP 0 108 727 A1, DE 26 38 417 A1, EP 2 708 102 B1 und FR 2 262 903 A1 offenbart.

Es ist Aufgabe der vorliegenden Erfindung, ein dreipunktgetragenes, landwirtschaftliches Anbaugerät mit einer verbesserten, einfach zu handhabenden Transportvorrichtung zu schaffen.

Die Aufgabe wird gelöst durch einen Gegenstand nach Anspruch 1. Vorteilhafte Ausgestaltungen der Erfindung sind den Unteransprüchen sowie der nachfolgenden Beschreibung zu entnehmen.

Ein erfindungsgemäßes Anbaugerät zeichnet sich dadurch aus, dass die Transportvorrichtung auf einer der Stirnseiten eine Dreipunktaufnahme mit einem oberen und zwei unteren Aufnahmemitteln aufweist. Bei der Dreipunktaufnahme handelt es sich um eine solche, deren obere und untere Aufnahmemittel im Ober-und Unterlenker des Dreipunkt-Krafthebers gehalten werden können. Für die Anordnung des Anbaugeräts für den Transportbetrieb kann somit auf das Umstecken der Stützräder sowie auf die Deichsel verzichtet werden. Insbesondere ist im Transportbetrieb das Anbaugerät ausschließlich über den Dreipunkt-Kraftheber des zugehörigen Schleppers getragen, sodass auf eine Abstützung mittels der Stützräder verzichtet werden kann. Vorzugsweise können für die Anordnung des oberen und/oder der unteren Aufnahmemittel ein oder mehrere bereits vorhandene Rahmenteile eines bereits existierenden Anbaugeräts verwendet werden, um die Dreipunktaufnahme an dem Anbaugerät zu befestigen. Dies vereinfacht die Nachrüstung bereits auf dem Markt befindlicher Anbaugeräte sowie die Integration der erfindungsgemäßen Lösung bei der Neuherstellung eines erfindungsgemäßen Anbaugeräts.

Die Erfindung zeichnet sich dadurch aus, dass das Anbaugerät die Dreipunktaufnahme als weitere Dreipunktaufnahme zusätzlich zu einer auf einer der Längsseiten angeordneten ersten Dreipunktaufnahme, über die das Anbaugerät im Feldbetrieb von einem Dreipunkt-Kraftheber eines Schleppers gehalten wird, aufweist oder dass die Dreipunktaufnahme als lösbar festlegbare und insbesondere umsteckbare Dreipunktaufnahme ausgebildet ist, die für den Feldbetrieb auf einer der Längsseiten und für den Transportbetrieb auf einer der Stirnseiten festlegbar ist, wobei über die lösbar festlegbare Dreipunktaufnahme das Anbaugerät im Feldbetrieb von einem Dreipunkt-Kraftheber eines Schleppers gehalten ist.

Eine erfindungsgemäße Ausbildung mit lediglich einer einzigen, lösbar festgelegten Dreipunktaufnahme minimiert das Gewicht des erfindungsgemäßen Anbaugeräts, führt allerdings dazu, dass die Dreipunktaufnahme auf dem Feld gelöst an die Stirn- oder Längsseite transportiert und dort befestigt werden muss. Beispielsweise kann die Dreipunktaufnahme, nachdem Dreipunktaufnahme-Befestigungsmittel, die die Dreipunkt-Aufnahme am weiteren Anbaugerät halten, gelöst wurden, während dieses Vorgangs an dem Dreipunkt-Kraftheber eines Schleppers befestigt bleiben. Typische Befestigungsmittel sind beispielsweise mit Sicherungsstiften versehen Bolzen, die ineinander gesteckte Teile der lösbar festlegbaren Dreipunktaufnahme und des weiteren Anbaugeräts gegeneinander sichern. Mit der gelösten Dreipunktaufnahme verfährt der Schlepper an die weitere Befestigungsstelle an Stirn- oder Längsseite, wo die Dreipunktaufnahme wieder mit entsprechenden Befestigungsmittel festgelegt wird. Zumindest ein Teil der Transportvorrichtung wird für den Feldbetrieb verwendet.

Alternativ kann auf das Lösen und Festlegen der Dreipunktaufnahme am weiteren Anbaugerät bei einem erfindungsgemäßen Anbaugerät mit zwei Dreipunktaufnahmen verzichtet werden. Die Anbindung der jeweiligen Dreipunktaufnahme am Schlepper erfolgt auf die übliche Art und Weise.

Nachfolgend beschriebene Ausführungsbeispiele beziehen sich auf die erfindungsgemäße Variante mit zwei Dreipunktaufnahmen, wenn explizit von einer ersten und/oder einer weiteren Dreipunktaufnahme gesprochen wird. Ansonsten sind -sofern technisch sinnvoll- beide Varianten umfasst.

Insbesondere sind die einzelne oder die beiden Dreipunktaufnahmen im Feldbetrieb und im Transportbetrieb an einem, vorzugsweise demselben insbesondere als Längsseitenträger ausgebildeten Rahmenteil befestigt, sodass Teile eines das Anbaugerät stabilisierenden Rahmens des Anbaugeräts verwendet werden können. Die Festlegung an demselben Rahmenteil erleichtert die Auslegung der Dreipunktaufnahme. Der Rahmen des Anbaugeräts umfasst insbesondere einen oder mehrere Längsseitenträger, die über weitere vorzugsweise strebenartige Rahmenteile und/oder eine Einhausung von Arbeitsmitteln miteinander verbunden sein können.

Ein erfindungsgemäßes Anbaugerät weist eine (horizontale) Erstreckung in Richtung der Längsseite von maximal 9 m auf. Es ist vorzugsweise bis zu 6 m lang. Die horizontale Erstreckung einer Stirnseite senkrecht zur Längserstreckung der Längsseite beträgt bis zu 3 m, vorzugsweise bis zu 2,5 m. Es versteht sich, dass die Erstreckung der Längsseite sich aus einer gradlinigen Erstreckung entlang der in einer Draufsicht längeren Seite des Anbaugeräts unabhängig von deren Kontur ergibt, die Erstreckung der Stirnseite entspricht dann der Erstreckung des Anbaugeräts quer zu dieser gradlinigen Erstreckung ebenfalls wieder unabhängig von deren Kontur. Insgesamt wird somit ein Rechteck um das Anbaugerät in seiner Draufsicht gelegt, wobei etwaige einklapp- oder hochstellbare Teile des Anbaugeräts in einer für den Transportbetrieb vorgesehenen Stellung angeordnet sind und unabhängig davon, ob gegenüberliegende Stirn- oder Längsseiten unterschiedlich lang sind.

Vorteilhafterweise ist die Dreipunktaufnahme mit dem oberen Aufnahmemittel mittels zumindest einer Diagonalstrebe an dem zumindest einen Rahmenteil des Anbaugeräts und insbesondere an dem zumindest einen/dem Längsseitenträger des Anbaugeräts gehalten. So kann die Dreipunktaufnahme auf einfache Weise nachgerüstet werden, ohne dass zusätzliche Rahmeteile außerhalb der Dreipunktaufnahme und deren Abstützung in den Rahmen des Anbaugeräts integriert werden müssen. Ein tragender Rahmen des Anbaugeräts kann unverändert bleiben. Insbesondere kann das obere Aufnahmemittel der Dreipunktaufnahme über eine Diagonalstrebe auf einen vorderen Längsseitenträger des Anbaugeräts und über eine weitere Diagonalstrebe auf einen hinteren Längsseitenträger des Anbaugeräts an einem bereits existierenden Rahmen abgestützt werden. Vorzugsweise verlaufen diese Diagonalstreben in Richtung der Mitte des Anbaugeräts, wenn dieses in seiner Feldbetriebsstellung in Fahrtrichtung des Schleppers betrachtet wird. Eine besonders stabile Konstruktion ergibt sich vorzugsweise bei Varianten mit zwei Dreipunktaufnahmen dann, wenn die Diagonalstrebe, die auf der Stirnseite im Bereich des oberen Aufnahmemittels der Dreipunktaufnahme festgelegt sind, zwischen den zumindest im Feldbetrieb dort vorhandenen zwei unteren Aufnahmemitteln der längsseitigen Dreipunktaufnahme an dem Rahmenteil, insbesondere dem Längsseitenträger befestigt ist. Bei Varianten mit je einer Diagonalstrebe auf der vorderen und auf der hinteren Längsseite gilt dies dann analog für die zweite Diagonalstrebe und deren Anordnung und Befestigung auf der anderen Längsseite.

Alternativ oder ergänzend kann das obere Aufnahmemittel an einem oberen Längsträger des Anbaugeräts abgestützt sein. Dies gilt insbesondere für Varianten, bei denen das Anbaugeräts bereits standardmäßig mit einem oberen Rahmenträger versehen ist, der im Fahrbetrieb quer zur Fahrtrichtung ausgerichtet ist und sich über zumindest einen Teil der Breite des Anbaugeräts erstreckt. Alternativ oder ergänzend kann es sich auch um eine Festlegung an einem oberen Rahmenteil handeln. Dieser Rahmenträger bzw. dieses obere Rahmenteil kann ebenfalls wiederum bis zu einer Verbindung mit der längsseitig angeordneten Dreipunktaufnahme führen, sodass die gesamte Konstruktion auch für einen Transportbetrieb, in dem das gesamte Gewicht des Anbaugeräts vom Schlepper getragen wird, ausreichend stabil ist. Als oberer Längsträger wird ein solcher verstanden, der oberhalb eines seitlichen Längsseitenträger angeordnet ist und der in einer Ansicht auf eine Stirnseite bei zwei Längsseitenträgern unabhängig von deren Höhe zwischen diesen angeordnet ist. Ein Längsseitenträger ist ein solcher, der einen Rahmen des Geräts mit ausbildet und der beispielsweise innerhalb oder außerhalb einer Einhausung bzw. eines Gehäuses in Richtung der Längsseite des Anbaugeräts verläuft. Ein Längsseitenträger kann das Gehäuse oder die Einhausung auch mit ausbilden.

Gemäß einer weiteren vorteilhaften Ausbildung der Erfindung kann das Anbaugeräts alternativ oder ergänzend mit der weiteren Dreipunktaufnahme versehen sein, die direkt an einer Einhausung zumindest eines der Arbeitsmittel abgestützt ist. Als Arbeitsmittel wird beispielsweise ein Schneidwerkzeug umfassend Klingen, Befestigungsmittel sowie Antriebsmittel hierfür verstanden. Solcherart Arbeitsmittel sind zum Teil in stabilen Einhausungen unterzubringen, um einen sicheren Feldbetrieb zu ermöglichen.

Vorteilhafterweise ist die Dreipunktaufnahme auf einer von einer stirnseitigen Getriebeanordnung abgewandt liegenden Stirnseite angeordnet, sodass etwaige Antriebsstränge unbeeinflusst von der Anordnung der Dreipunktaufnahme sind.

Gemäß einer weiteren vorteilhaften Ausbildung der Erfindung ist ein Dreipunktaufnahmerahmen der weiteren Dreipunktaufnahme horizontalstrebenlos ausgebildet. Beispielsweise ist bei einer dreieckigen Ausbildung der Dreipunktaufnahme mit in den Ecken des Dreiecks angeordneten Aufnahmemitteln auf die untere, die Basis des Dreiecks bildende Strebe zu verzichten. Deren Funktion kann beispielsweise über eine Einhausung realisiert werden. In diesem Fall umfasst der Dreipunktaufnahmerahmen lediglich schräg zum oberen Aufnahmemittel hoch verlaufende Diagonalstreben.

Vorteilhafterweise kann die weitere Dreipunktaufnahme bezogen auf die Stirnseite und bezüglich eines Anbaugeräteschwerpunkts außermittig angeordnet sein, um etwaig auch im Fahrbetrieb ausladenden Teilen des Anbaugeräts Rechnung tragen zu können. Eine bezüglich des Anbaugeräteschwerpunkts außermittige Anordnung ist insbesondere eine solche, bei der in einer Ansicht auf eine Stirnseite der Schwerpunkt des Anbaugeräts nicht auf einer mittig durch das obere Aufnahmemittel verlaufenden Senkrechten zum Untergrund liegt. Ziel es hierbei, die Breite des Anbaugeräts im Transportbetrieb betrachtet in Fahrtrichtung des Schleppers möglichst gleichmäßig hinter dem Schlepper zu verteilen, damit dieses inklusive aller Teile möglichst mittig hinter dem Schlepper getragen ist. Eine außermittige Anordnung kann durch eine hinsichtlich des Schwerpunkts entsprechend verschobene Anordnung der weiteren Dreipunktaufnahme realisiert werden. Alternativ kann diese Anordnung allerdings auch durch zusätzliche obere und untere Aufnahmemittel der weiteren Dreipunktaufnahme ermöglicht werden, so dass die weitere Dreipunktaufnahme zwei in einer Ansicht nebeneinander angeordnete obere Aufnahmemittel und entsprechend zusätzliche untere Aufnahmemittel, die zur Kopplung mit dem Dreipunkt-Kraftheber des Schleppers dienen, aufweist.

Für eine Sicherung der mit der weiteren Dreipunktaufnahme versehenen Stirnseite im Feldbetrieb kann das Anbaugerät mit einem insbesondere in eine Sicherungsposition klappbaren Rahmen versehen sein, der in die Dreipunktaufnahme integriert ist.

Für einen größeren Bodenabstand im Fahrbetrieb ist es weiterhin vorteilhaft, wenn die unteren Aufnahmemittel der weiteren Dreipunktaufnahme tiefer als ein angrenzender Anbaugeräterahmen, zu dem beispielsweise der oder die Längsseitenträger gehören, angeordnet sind.

Die vor- und nachstehend beschriebenen Vorteile kommen insbesondere einem Anbaugerät zugute, welches als Krautschläger, Bodenfräse oder Mulcher ausgebildet ist.

Weitere vorteilhafte Ausgestaltungen der Erfindung sind der nachfolgenden Figurenbeschreibung zu entnehmen. Schematisch dargestellt zeigt:
- Fig. 1: einen erfindungsgemäßen Gegenstand im Transportbetrieb an einem Schlepper,
- Fig. 2: den erfindungsgemäßen Gegenstand nach Fig. 1 in einer perspektivischen Einzelansicht,
- Fig. 3: den Gegenstand nach Fig. 2 in einer Längsseitenansicht,
- Fig. 4: den erfindungsgemäßen Gegenstand nach Fig. 1 in einer weiteren perspektivischen Ansicht,
- Fig. 5: einen weiteren erfindungsgemäßen Gegenstand in einer perspektivischen Ansicht.

Einzelne technische Merkmale der nachfolgend beschriebenen Ausführungsbeispiele können mit den Merkmalen zumindest des unabhängigen Anspruchs zu erfindungsgemäßen Weiterbildungen führen. Sofern sinnvoll sind identische Bezugsziffern für gleichwirkende Merkmale vergeben.

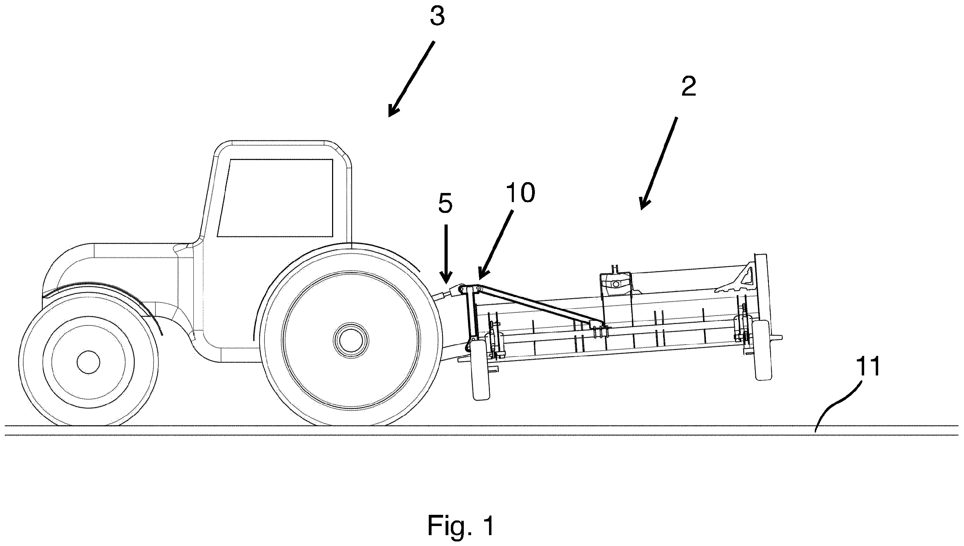

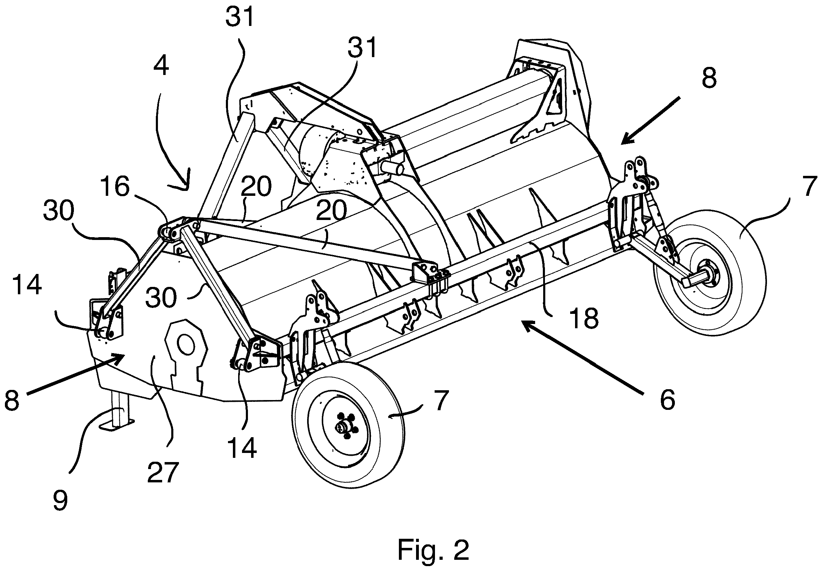

Ein erfindungsgemäßes, dreipunktgetragenes, landwirtschaftliches Anbaugerät 2 befindet sich im Transportbetrieb angehoben durch einen Dreipunkt-Kraftheber 5 eines Schleppers 3 hinter diesem (Fig.1). Das Anbaugerät 2 umfasst eine im Feldbetrieb vorhandene vordere Längsseite 4 sowie eine hintere Längsseite 6, an der auch Stützräder 7 in den Eckbereichen hin zu Stirnseiten 8 angeordnet sind. Auf der vorderen Längsseite 4 ist eine erste Dreipunktaufnahme 10 umfassend Streben 31 befestigt, über die das Anbaugerät 2 im Feldbetrieb getragen wird (Fig. 2). Für den Transportbetrieb umfasst das Anbaugerät 2 erfindungsgemäß eine weitere Dreipunktaufnahme 12, die auf einer Stirnseite 8 des Anbaugeräts 2 befestigt ist und die die Transportvorrichtung des Anbaugeräts 2 ausbildet. Die Verschraubungen der weiteren Dreipunktaufnahme an als Längsseitenträgern 18 ausgebildeten Rahmenteilen ermöglicht eine einfache Nachrüstung bestehender Geräte.

Die weitere Dreipunktaufnahme 12 umfasst untere Aufnahmemittel 14 und ein oberes Aufnahmemittel 16, über die das Anbaugerät 2 im Transportbetrieb mittels eines Dreipunkt-Krafthebers 5 getragen wird. Die weitere Dreipunktaufnahme 12 ist über zwei Diagonalstreben 20 an einem vorderen und einem hinteren Längsseitenträger 18 abgestützt. Auf der den Stützrädern 7 gegenüberliegenden Seite sind Stützen 9 angeordnet, mittels derer das Anbaugerät 2 auf einem Untergrund 11 abgestellt werden kann (Fig. 1 u. 3). Hierüber kann nach dem Feldbetrieb das Anbaugerät 2 in einer Position abgestellt werden, in der ein Entkoppeln von der ersten Dreipunktaufnahme 10 und Einkoppeln mit der weiteren Dreipunktaufnahme 12 auf einfache Weise möglich wird.

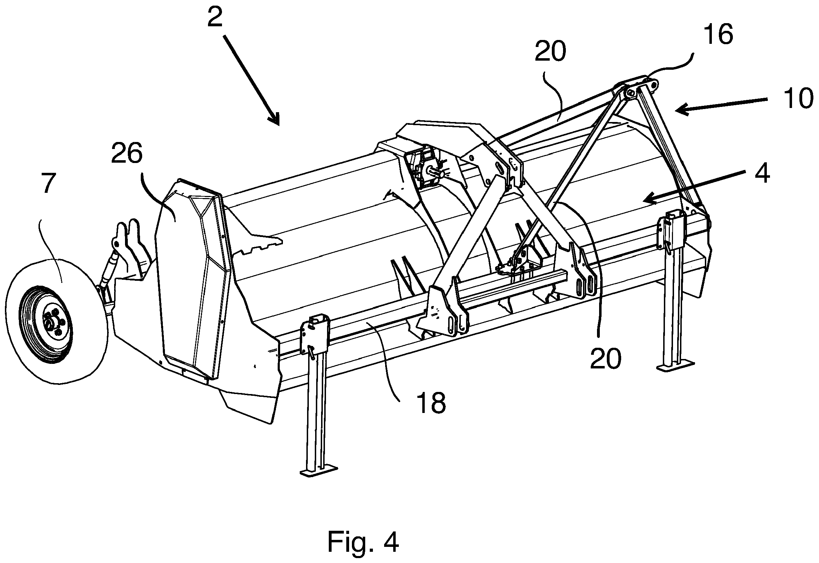

Die Diagonalstreben 20 erstrecken sich von dem oberen Aufnahmemittel 16 bis hin ungefähr zur Mitte des Anbaugeräts betrachtet in Fahrtrichtung F während des Feldbetriebs, sodass eine sichere und stabile Befestigung im Transportbetrieb ermöglicht ist, ohne dass ein Rahmen des Anbaugeräts 2 wesentlich verstärkt werden muss. Die Festlegung der auf der vorderen Längsseite 4 am vorderen Längsseitenträger 18 befestigten Diagonalstrebe 20 erfolgt in oder gegen die Fahrtrichtung (im Feldbetrieb und höhenunabhängig) betrachtet zwischen den beiden unteren Aufnahmemitteln, so dass etwaig an der Befestigung auftretende Kräfte verbessert in die den Rahmen des Anbaugeräts 2 zusätzlich aussteifende erste Dreipunktaufnahme 10 eingeleitet werden können (Fig. 4).

Der einfacheren Montage und Nachrüstung halber ist die weitere Dreipunktaufnahme 12 auf einer von einer stirnseitigen Getriebeanordnung 26 abgewandt liegenden Stirnseite 8 angeordnet.

Ebenfalls verwendet die weitere Dreipunktaufnahme 12 keine untere Horizontalstrebe und ist mithin horizontalstrebenlos ausgebildet. In horizontaler Richtung erfolgt eine Abstützung über einen sich flächig entlang der Stirnseite erstreckenden Gehäuseteil 27, der Teil einer Einhausung der nicht weiter dargestellten Arbeitsmittel ist. Für eine einfache Höherlegung des Anbaugeräts 2 im Transportbetrieb sind die unteren Aufnahmemittel 14 etwas unterhalb der Längsseitenträger 18 an diesen befestigt.

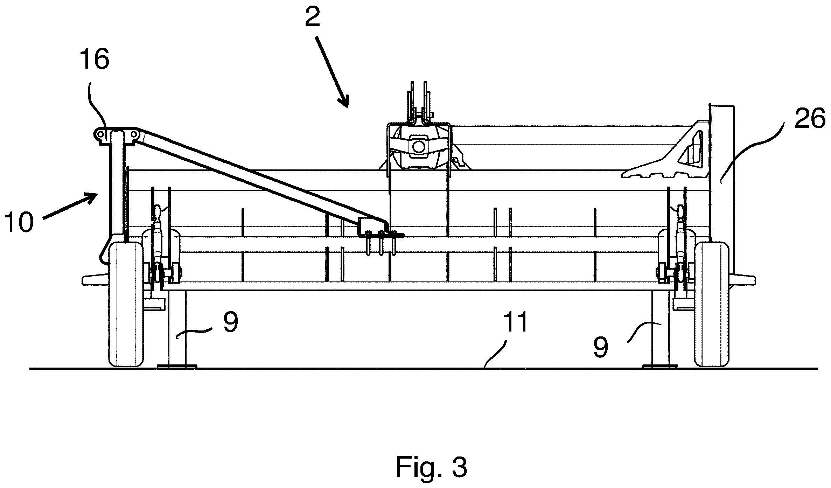

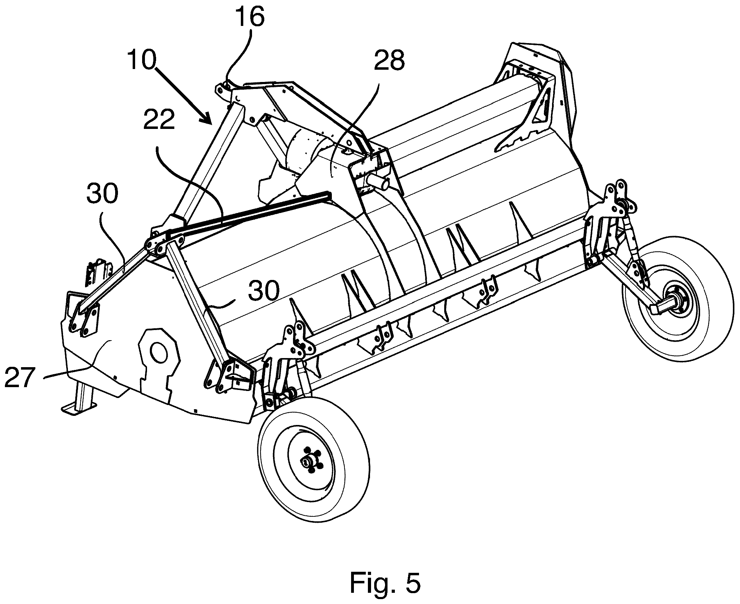

Alternativ zu dem Ausführungsbeispiel der Erfindung nach den Figuren 1-3 verzichtet das Ausführungsbeispiel der Fig. 5 auf die Diagonalstreben 20 und besitzt eine Abstützung des oberen Aufnahmemittels 16 über einen oberen Längsseitenträger 22. Dieser führt zu einer zentral angeordneten Gehäuseaussteifung 28, die als Teil des Rahmens des Anbaugeräts ebenfalls das obere Aufnahmemittel 16 der ersten Dreipunktaufnahme 10 stützt.

Beide weiteren Dreipunktaufnahmen 12 der dargestellten erfindungsgemäßen Anbaugeräte sind mit einem horizontalstrebenlosen Rahmen versehen, der neben den oberen und unteren Aufnahmemitteln 14 und 16 zwei parallel zur flächigen Erstreckung des Gehäuseteils 27 verlaufende Rahmenstreben 30 aufweist. Diese können zusätzlich am Gehäuseteil 27 befestigt sein.

## Patentansprüche

1. Landwirtschaftliches Anbaugerät (2), insbesondere zur Bodenbearbeitung und/oder Erntevorbereitung, mit einer vorderen Längsseite (4), einer hinteren Längsseite (6), zwei im Vergleich zu den Längsseiten (4, 6) kürzeren Stirnseiten (8) und mit einer Transportvorrichtung für einen Transportbetrieb, wobei
die Transportvorrichtung auf einer der Stirnseiten (8) eine Dreipunktaufnahme (12) mit einem oberen und zwei unteren Aufnahmemitteln (14, 16)**,** wobei
das Anbaugerät die Dreipunktaufnahme (12) als weitere Dreipunktaufnahme (12) zusätzlich zu einer auf einer der Längsseiten (4,6) angeordneten ersten Dreipunktaufnahme (10), über die das Anbaugerät (2) im Feldbetrieb von einem Dreipunkt-Kraftheber (5) eines Schleppers (3) gehalten wird, aufweist oder dass die Dreipunktaufnahme (12) als lösbar festlegbare und insbesondere umsteckbare Dreipunktaufnahme ausgebildet ist, die für den Feldbetrieb auf einer der Längsseiten (4, 6) und für den Transportbetrieb auf einer der Stirnseiten (8) festlegbar ist, wobei über die lösbar festlegbare Dreipunktaufnahme das Anbaugerät (2) im Feldbetrieb von einem Dreipunkt-Kraftheber (5) eines Schleppers (3) gehalten ist.

2. Anbaugerät nach Anspruch 1, **dadurch gekennzeichnet, dass** die eine oder die beiden Dreipunktaufnahmen (10, 12) im Feldbetrieb und im Transportbetrieb an einem, vorzugsweise demselben insbesondere als Längsseitenträger (18) ausgebildeten Rahmenteil befestigt sind.

3. Anbaugerät nach einem der vorherigen Ansprüche, **dadurch gekennzeichnet, dass** die Dreipunktaufnahme (12) mit dem oberen Aufnahmemittel (16) mittels zumindest einer Diagonalstrebe (20) an dem zumindest einen Rahmenteil des Anbaugeräts (2) gehalten ist.

4. Anbaugerät nach Anspruch 3, **dadurch gekennzeichnet, dass** die Diagonalstrebe (20) zwischen den zwei unteren Aufnahmemitteln (14) der längsseitigen Dreipunktaufnahme (10) an dem Rahmenteil befestigt ist.

5. Anbaugerät nach einem der vorherigen Ansprüche, **dadurch gekennzeichnet, dass** das obere Aufnahmemittel (16) an einem oberen Längsträger (22) des Anbaugeräts (2) abgestützt ist.

6. Anbaugerät nach einem der vorherigen Ansprüche, **dadurch gekennzeichnet, dass** die Dreipunktaufnahme (12) direkt an einer Einhausung zumindest eines Arbeitsmittels abgestützt ist.

7. Anbaugerät nach einem der vorherigen Ansprüche, **dadurch gekennzeichnet, dass** die Dreipunktaufnahme (12) auf einer von einer stirnseitigen Getriebeanordnung (26) abgewandt liegenden Stirnseite (8) angeordnet ist.

8. Anbaugerät nach einem der vorherigen Ansprüche, **dadurch gekennzeichnet, dass** ein Dreipunktaufnahmerahmen der Dreipunktaufnahme (12) horizontalstrebenlos ausgebildet ist.

9. Anbaugerät nach einem der vorherigen Ansprüche, **dadurch gekennzeichnet, dass** die Dreipunktaufnahme (12) bezogen auf die Stirnseite (8) und bezüglich eines Anbaugeräteschwerpunkts außermittig angeordnet ist.

10. Anbaugerät nach einem der vorherigen Ansprüche, **gekennzeichnet durch** eine Ausbildung als Krautschläger, Bodenfräse oder Mulcher.

## Claims

1. Agricultural implement (2), in particular for soil cultivation and/or harvest preparation, having a front longitudinal side (4), a rear longitudinal side (6) and two end faces (8) which are shorter in comparison with the longitudinal sides (4, 6), and having a transport apparatus for transport mode, wherein the transport apparatus has on one of the end faces (8) a three-point receiver (12) with one upper and two lower receiving means (14, 16), wherein
the implement has the three-point receiver (12) as a further three-point receiver (12), in addition to a first three-point receiver (10) which is arranged on one of the longitudinal sides (4, 6) and via which the implement (2) in field mode is held by a three-point power lift (5) of a tractor (3), or in that the three-point receiver (12) is configured as a releasably securable, and in particular repositionable, three-point receiver which can be secured for field mode on one of the longitudinal sides (4, 6) and for transport mode on one of the end faces (8), wherein the implement (2) is held in field mode by a three-point power lift (5) of a tractor (3) via the releasably securable three-point receiver.

2. Implement according to Claim 1, **characterized in that** in field mode and in transport mode the one three-point receiver or the two three-point receivers (10, 12) are fastened to a frame part, preferably the same frame part, which is configured, in particular, as a longitudinal side member (18).

3. Implement according to one of the preceding claims, **characterized in that** the three-point receiver (12) with the upper receiving means (16) is held by means of at least one diagonal strut (20) on the at least one frame part of the implement (2).

4. Implement according to Claim 3, **characterized in that** the diagonal strut (20) is fastened to the frame part between the two lower receiving means (14) of the three-point receiver (10) on the longitudinal side.

5. Implement according to one of the preceding claims, **characterized in that** the upper receiving means (16) is supported on an upper longitudinal member (22) of the implement (2).

6. Implement according to one of the preceding claims, **characterized in that** the three-point receiver (12) is supported directly on a casing of at least one working means.

7. Implement according to one of the preceding claims, **characterized in that** the three-point receiver (12) is arranged on an end face (8) facing away from a gear arrangement (26) on an end face.

8. Implement according to one of the preceding claims, **characterized in that** a three-point receiver frame of the three-point receiver (12) is configured without horizontal struts.

9. Implement according to one of the preceding claims, **characterized in that** the three-point receiver (12) is arranged off-centre relative to the end face (8) and relative to a centre of gravity of the implement.

10. Implement according to one of the preceding claims, **characterized by** a configuration as a haulm topper, tiller or mulcher.

## Revendications

1. Appareil rapporté agricole (2), notamment pour le travail du sol et/ou la préparation de la récolte, avec un côté longitudinal avant (4), un côté longitudinal arrière (6), deux côtés frontaux (8) plus courts en comparaison des côtés longitudinaux (4, 6) et avec un dispositif de transport pour un mode de transport, le dispositif de transport comportant sur l'un des côtés frontaux (8) un logement à trois points (12) avec un moyen de logement supérieur et deux moyens de logement inférieurs (14, 16),
l'appareil rapporté présentant le logement à trois points (12) en tant que logement à trois points (12) supplémentaire en plus d'un premier logement à trois points (10) agencé sur l'un des côtés longitudinaux (4, 6), par l'intermédiaire duquel l'appareil rapporté (2) est maintenu dans le mode de champ par un attelage à trois points (5) d'un tracteur (3), ou en ce que le logement à trois points (12) est configuré sous forme de logement à trois points pouvant être immobilisé de manière amovible et notamment pouvant être démonté, qui peut être immobilisé sur l'un des côtés longitudinaux (4, 6) pour le mode de champ et sur l'un des côtés frontaux (8) pour le mode de transport, l'appareil rapporté (2) étant maintenu dans le mode de champ par un attelage à trois points (5) d'un tracteur (3) par l'intermédiaire du logement à trois points pouvant être immobilisé de manière amovible.

2. Appareil rapporté selon la revendication 1, **caractérisé en ce que** l'un ou les deux logements à trois points (10, 12) sont fixés, dans le mode de champ et dans le mode de transport, à une partie du cadre, de préférence la même, notamment configurée sous forme de support latéral longitudinal (18).

3. Appareil rapporté selon l'une quelconque des revendications précédentes, **caractérisé en ce que** le logement à trois points (12) est maintenu avec le moyen de logement supérieur (16) au moyen d'au moins une entretoise diagonale (20) sur l'au moins une partie de cadre de l'appareil rapporté (2).

4. Appareil rapporté selon la revendication 3, **caractérisé en ce que** l'entretoise diagonale (20) est fixée à la partie de cadre entre les deux moyens de logement inférieurs (14) du logement à trois points côté longitudinal (10).

5. Appareil rapporté selon l'une quelconque des revendications précédentes, **caractérisé en ce que** le moyen de logement supérieur (16) s'appuie sur un support longitudinal supérieur (22) de l'appareil rapporté (2).

6. Appareil rapporté selon l'une quelconque des revendications précédentes, **caractérisé en ce que** le logement à trois points (12) s'appuie directement sur un carter d'au moins un moyen de travail.

7. Appareil rapporté selon l'une quelconque des revendications précédentes, **caractérisé en ce que** le logement à trois points (12) est agencé sur un côté frontal (8) détourné d'un agencement de transmission (26) côté frontal.

8. Appareil rapporté selon l'une quelconque des revendications précédentes, **caractérisé en ce qu'**un cadre de logement à trois points du logement à trois points (12) est configuré sans entretoise horizontale.

9. Appareil rapporté selon l'une quelconque des revendications précédentes, **caractérisé en ce que** le logement à trois points (12) est agencé de manière excentrée par rapport au côté frontal (8) et par rapport au centre de gravité de l'appareil rapporté.

10. Appareil rapporté selon l'une quelconque des revendications précédentes, **caractérisé par** une configuration en tant que broyeur de fanes, fraiseuse de sol ou broyeur.
